# EUROPÄISCHE PATENTSCHRIFT

(11) **EP 3 464 742 B1**
(45) Veröffentlichungstag und Bekanntmachung des Hinweises auf die Patenterteilung: **15.12.2021**
(21) Anmeldenummer: 17722819.4
(22) Anmeldetag: 15.05.2017
(51) Int. Cl.: E04B 1/94

(54) **DICHTUNGSSTREIFEN ZUR ABDICHTUNG VON FUGEN ZWISCHEN BAUELEMENTEN SOWIE VERFAHREN ZUR HERSTELLUNG EINES DICHTUNGSSTREIFENS**
SEAL STRIP FOR SEALING GAPS BETWEEN CONSTRUCTION ELEMENTS AND METHOD FOR PRODUCING A SEAL STRIP
BANDES D'ÉTANCHÉITÉ POUR L'ÉTANCHÉIFICATION DE JOINTS ENTRE DES ÉLÉMENTS DE CONSTRUCTION ET PROCÉDÉ DE FABRICATION D'UNE BANDE D'ÉTANCHÉITÉ

(30) Priorität: 02.06.2016 EP 16172573
(43) Veröffentlichungstag der Anmeldung: 10.04.2019
(73) Patentinhaber: Hilti Aktiengesellschaft, 9494 Schaan (LI)
(72) Erfinder: FÖRG, Christian, 86862 Dillishausen (DE)
(74) Vertreter: Hilti Aktiengesellschaft Corporate Intellectual Property
(86) Internationale Anmeldenummer: PCT/EP2017/061577
(87) Internationale Veröffentlichungsnummer: WO 2017/207253

(56) Entgegenhaltungen:
- EP-A1- 0 347 865
- DE-A1-102004 056 914
- DE-U1-202011 050 191
- GB-A- 2 376 706
- US-A- 5 326 609

## Beschreibung

### Technisches Gebiet

Die Erfindung betrifft Maßnahmen zum Abdichten von Fugen zwischen zwei Bauelementen, insbesondere Gebäudebauteilen, wie beispielsweise Gebäudedecken, -wänden, Trockenbauwänden oder dergleichen.

### Technischer Hintergrund

Beim Aufbau bzw. Montage von Gebäudebauteilen werden diese in der Regel nicht unmittelbar aneinander angesetzt, sondern es verbleibt eine Fuge, um relative Bewegungen zwischen den Gebäudebauteilen aufnehmen bzw. ausgleichen zu können. Um im Brandfall den Durchtritt von Brandgasen oder Flammen durch die Fuge zu vermeiden, wird diese in der Regel durch geeignete Maßnahmen abgedichtet. Die Abdichtung kann beispielsweise mit einem Dichtungsstreifen vorgenommen werden, der ganz oder teilweise aus einem intumeszierenden Material besteht.

Aus der Druckschrift US 2015/068139 A1 ist ein Verbindungssystem mit einem sich ausdehnenden Schaumstreifen bekannt, in den ein feuerbeständiges Material eingebettet ist.

Aus der Druckschrift GB 2376706 ist ein intumeszierender Streifen zum Anbringen an einer flachen Oberfläche mit zwei in Längsrichtung verlaufenden, voneinander beabstandeten Kanälen in einem extrudierten Trägermaterial bekannt, in denen jeweils intumeszierendes Material eingebracht ist.

Aus der Druckschrift US 6,112,488 A ist ein Dichtungsstreifen aus einem feuerbeständigem intumeszierenden Dichtungsmaterial bekannt, wobei eine der Hauptflächen an einer feuerbeständigen Materialtrennschicht angebracht ist und eine weitere der Hauptflächen zum Anbringen an einem Gebäudeverbindungsteil ausgebildet ist. Eine der Hauptflächen ist mit einem Klebstoff versehen, und mindestens eine der feuerbeständigen Trennschichten ist mit einem Teil einer der Hauptflächen des Dichtungsstreifens verbunden.

Aus der Druckschrift DE 23 517 23 ist ein dichter Belag einer Dehnungsfuge bekannt, der ein feuerabsperrendes, elastisches und bleibendes Teil, ein wasserdichtes Teil und eine obere gasundurchlässige Fugenbedeckung aufweist.

Die Druckschrift DE 20 2012 104 826 U1 beschreibt ein Fugendichtband zur Abdichtung einer Bauwerksfuge zwischen zwei Bauteilen. Das Dichtband weist einen Korpus aus einem rückstellfähigen Weichschaumstoffmaterial sowie zwei gegenüberliegende Breitseiten des Dichtbandes zur Anlage an die beiden durch die beiden Bauteile ausgebildeten Fugenflanken auf. Das Fugendichtband weist eine Materiallage eines gegen äußere Umgebungseinflüsse wirkenden, unter Einwirkung der Umgebungseinflüsse sein Volumen stark vergrößernden Material auf. Das Fugendichtband weist somit einen mehrlagigen Aufbau auf und die Fixierung erfolgt innerhalb der Fuge.

Die Druckschrift GB 2472402 offenbart eine Rauch- und Feuerdichtungsanordnung mit einer Anordnung von Dichtungselementen auf einer Befestigungsbasis.

Aus der DE 20 2011 050 191 U1 ist ein doppelseitig klebendes Dichtungsband mit mindestens einem nichtklebenden Kernband mit einer konstanten Dicke bekannt, wobei das Kernband aus einem elastisch kompressiblen Schaumträger, einem ersten flexiblen Klebeband, das beidseitig eine Klebstoffschicht aufweist, und einem zweiten flexiblen Klebeband, das beidseitig eine Klebstoffschicht aufweist, besteht.

Obige Dichtungsstreifen weisen jedoch Nachteile bei deren Montage und/oder deren Bewegungsaufnahme auf, und es ist daher wünschenswert, einen verbesserten Dichtungsstreifen zur Verfügung zu stellen, der einfacher handhabbar ist und eine hohe Bewegungsaufnahme ermöglicht. Weiterhin ist der Herstellungsprozess der Dichtungsstreifen aus dem Stand der Technik häufig aufwendig, und es ist daher eine weitere Aufgabe der vorliegenden Erfindung, ein verbessertes Verfahren zur Herstellung eines solchen Dichtungsstreifens zur Verfügung zu stellen.

### Beschreibung der Erfindung

Diese Aufgaben werden durch den Dichtungsstreifen zum Abdichten von Fugen zwischen Bauelementen nach Anspruch 1 sowie die Verfahren zur Herstellung von Dichtungsstreifen gemäß den nebengeordneten Ansprüchen gelöst. Weitere Ausgestaltungen sind in den abhängigen Ansprüchen angegeben. Gemäß einem ersten Aspekt ist ein Dichtungsstreifen zum Abdichten einer Fuge zwischen zwei Bauelementen, insbesondere zwischen Gebäudebauteilen vorgesehen, wobei sich der Dichtungsstreifen in einer Längsrichtung erstreckt und im Querschnittsprofil zwei Befestigungsabschnitte aufweist, zwischen denen zwei separate benachbarte Dichtabschnitte vorgesehen sind, wobei der Dichtungsstreifen aus einem Folienmaterial und einem komprimierbaren Schaum ausgebildet ist, wobei die Dichtabschnitte jeweils eine, zwischen zwei Folienabschnitten des Folienmaterials ausgebildete, Kammer aufweisen, wobei die Dichtabschnitte unmittelbar aneinander angrenzend ausgebildet sind, wobei die Dichtabschnitte durch eine in Längsrichtung verlaufende Soll-Biegestelle voneinander getrennt sind, wobei die Dichtabschnitte hin zu der Soll-Biegestelle sich verjüngend ausgebildet sind, um eine Ausnehmung zwischen den Dichtabschnitten auszubilden, und wobei die Kammer mit dem komprimierbaren Schaum gefüllt ist. Erfindungsgemäß ist vorgesehen, dass die Folienabschnitte der Dichtabschnitte an den Befestigungsabschnitten und an der Soll-Biegestelle miteinander verschweißt sind.

Eine Idee des obigen Dichtungsstreifens besteht darin, diesen als elastisches bandförmiges Dichtungselement vorzusehen, das zwei sich in Längsrichtung erstreckende, voneinander getrennte, einander unmittelbar benachbarte Dichtabschnitte aufweist, die mit einem komprimierbaren Schaum gefüllt sind und von einem flexiblen Folienmaterial umgeben sind. Zwischen den Dichtabschnitten befindet sich eine in Längsrichtung verlaufende Soll-Biegestelle, an der die Dichtabschnitte zueinander verschwenkbar sind. So können die Dichtabschnitte beim Einsetzen in eine Fuge zwischen zwei Bauelementen aufeinander geklappt werden und aufgrund des flexiblen Folienmaterials dabei einfach verformt werden, so dass sich die Dichtabschnitte einfach dem Fugenquerschnitt anpassen.

Durch das Trennen der Dichtabschnitte lediglich durch eine Soll-Biegestelle wird die Fuge im Wesentlichen über ihre Gesamtbreite vollständig verschlossen, ohne dass eine nennenswerte Schwachstelle ausgebildet wird. Durch die Kombination der Soll-Biegestelle zwischen den Dichtabschnitten und der Ummantelung des komprimierbaren Schaums mit dem Folienmaterial kann der Dichtungsstreifen auch Änderungen der Breite der Fuge in einem großen Bereich aufnehmen, ohne dass es zu Undichtigkeiten kommt.

Weiterhin kann der Schaum einen elastischen Polyurethan-Schaum aufweisen und insbesondere eine Dichte von 40 - 400 kg/m³ haben. Ein Schaummaterial für die Dichtabschnitte mit diesen Eigenschaften hat sich im Sinne der Handhabbarkeit und Abdichtungseigenschaften als vorteilhaft herausgestellt. Das Schaummaterial kann auch ein offen- oder geschlossenzelliges Schaummaterial sein oder ein Schaummaterial auf Silikonbasis.

Die Dichtabschnitte sind unmittelbar aneinander angrenzend ausgebildet. Dadurch wird nach dem Einbringen in die Fuge auch eine zuverlässige Abdichtung im Bereich zwischen den Dichtabschnitten erreicht.

Gemäß einer Ausführungsform kann die Ausnehmung keilförmig ausgebildet sein. Dies verringert die Stauchung des elastischen Materials im Bereich der Soll-Biegestelle bei starkem Zusammenklappen entlang der Soll-Biegestelle.

Weiterhin können die Dichtabschnitte nur über eine Hauptfläche des Dichtungsstreifens hervorstehen.

Insbesondere können die Befestigungsabschnitte auf derjenigen Seite des Dichtungsstreifens, auf der auch die Dichtabschnitte hervorstehen, mit Klebeflächen, insbesondere mit Hotmelt- oder Acrylatklebstoff, versehen sein. Die bezüglich der Dichtabschnitte außenliegenden Befestigungsabschnitte können also mit einer Klebefläche versehen sein, um den Dichtungsstreifen an außerhalb der Fuge liegenden Flächen der Bauelemente, zwischen denen die Brandschutzfuge ausgebildet ist, aufzukleben, so dass die Dichtabschnitte in die Fuge hineinragen und diese vollständig verschließen.

Es kann vorgesehen sein, dass das Folienmaterial mit einer strukturellen Verstärkung versehen ist, die insbesondere als aufgebrachte oder eingebettete Gitter- oder Gewebestruktur ausgebildet ist.

Es kann auch vorgesehen sein, dass das Folienmaterial den Dichtungsstreifen vollumfänglich umhüllt.

Gemäß einem weiteren Aspekt ist eine Anordnung vorgesehen, umfassend:
- der obige Dichtungsstreifen;
- eine Fuge zwischen zwei Bauelementen,
   wobei die Befestigungsabschnitte des Dichtungsstreifens auf sich an die Fuge anschließende Randbereiche der Bauelemente aufgeklebt sind, so dass die Dichtabschnitte in einem zumindest teilweise um die Sollbiegestelle zusammengeklappten Zustand in die Fuge hineinragen.

Gemäß einem weiteren Aspekt ist ein Verfahren zur Herstellung des obigen Dichtungsstreifens, vorgesehen, mit folgenden Schritten:
- Bereitstellen eines länglichen Folienbands;
- Einbringen von flüssigem, nicht ausgehärteten Schaummaterial auf das Folienband;
- Umbiegen des Folienbands quer zur Längsrichtung des Folienbands, um einen Folienschlauch auszubilden; und
- Pressen des Folienschlauchs mit einem Pressstempel, so dass an den Befestigungsabschnitten und an der Sollbiegestelle übereinanderliegende Folienabschnitte miteinander verschweißt werden und sich das Schaummaterial vor dem Aushärten in benachbarten Kammern sammelt, um die Dichtabschnitte auszubilden.

Eine Idee des obigen Herstellungsverfahrens besteht darin, einen Folienschlauch vorzusehen, der mit einer Menge an noch flüssigem Schaummaterial gefüllt ist. Durch eine Prägung mit einem Formstempel werden Randbereiche des Querschnittprofils des Folienschlauches zusammengepresst, so dass kein bzw. nur eine minimale Menge Schaum zwischen den zusammengepressten Teilen des Folienschlauchs verbleibt. Diese minimale Menge des Schaumes kann vorteilhafterweise als Klebstoff zum Verkleben der Randbereiche des Querschnittprofils des Folienschlauches dienen. In diesem Fall verhindert der Formstempel das Schäumen in den Randbereichen. Weiterhin wird mit Hilfe eines stegförmigen Prägeabschnitts die Schaumfüllung entlang der Längsrichtung separiert, so dass die Soll-Biegestelle in der Mitte des Dichtungsprofils des Dichtungsstreifens durch Aufeinanderkleben der gegenüberliegenden Abschnitte des Folienschlauchs entsteht. Zwischen den Randbereichen und der Soll-Biegestelle bilden sich so Kammern aus, in denen das flüssige Schaummaterial aufschäumt und aushärtet. Auf diese Weise kann ein Dichtungsstreifen mit einem Dichtungsprofil wie oben beschrieben ausgebildet werden, der an den Befestigungsabschnitten lediglich mit der Klebefläche versehen werden muss, um den Dichtungsstreifen auszubilden.

Weiterhin kann an den Befestigungsabschnitten zwischen den Folienabschnitten eine Schicht des Schaummaterials verbleiben, um die Befestigungsabschnitte zu verstärken.

Gemäß einem weiteren Aspekt ist ein Verfahren zur Herstellung des obigen Dichtungsstreifens, vorgesehen, mit folgenden Schritten:
- Bereitstellen eines länglichen ersten Folienbands in einem Formteil mit zueinander benachbarten Vertiefungen;
- Aufbringen von flüssigem, nicht ausgehärteten Schaummaterial in die Vertiefungen des ersten Folienbandes;
- Anbringen eines zweiten Folienbands auf das erste Folienband, so dass die Folienbänder Befestigungsabschnitten und an einer Sollbiegestelle miteinander verschweißt werden und das Schaummaterial in durch die Vertiefungen gebildeten Kammern eingeschlossen wird.

Eine Idee des obigen alternativen Herstellungsverfahrens besteht darin, zwei Folien miteinander zu verbinden, wobei eine erste Folie in ein Formprofil aufgelegt wird, das zwei Vertiefungen aufweist, die miteinander lediglich durch einen Steg getrennt sind. Nun wird in die so gebildeten Mulden flüssiges Schaummaterial eingebracht und eine weitere Folie so auf die erste Folie verbunden, dass diese an den Befestigungsabschnitten und den Mittenabschnitt fest miteinander verbunden sind. Auf diese Weise werden in den Mulden die Kammern ausgebildet, in denen sich das flüssige Schaummaterial aufschäumt und verfestigt.

Die obigen Herstellungsverfahren eines Dichtungsstreifens können auch im Endlos-Verfahren durchgeführt werden, insbesondere können diese auf einem Band erfolgen, das die Form des Pressstempels hat.

### Kurze Beschreibung der Zeichnungen

Ausführungsformen werden nachfolgend anhand der beigefügten Zeichnungen näher erläutert. Es zeigen:
- Figur 1: eine schematische Darstellung eines Querschnittsprofils eines nicht verbauten Dichtungsstreifens gemäß einer Ausführungsform;
- Figuren 2a und 2b: in Fugen unterschiedlicher Breite eingebrachte Dichtungsstreifen;
- Figuren 3a bis 3c: Verfahrenszustände zur Herstellung des Dichtungsstreifens gemäß einer ersten Ausführungsform; und
- Figuren 4a bis 4c: Verfahrenszustände eines Verfahrens zur Herstellung eines Dichtungsstreifens gemäß einer weiteren Ausführungsform.

### Beschreibung der Ausführungsformen

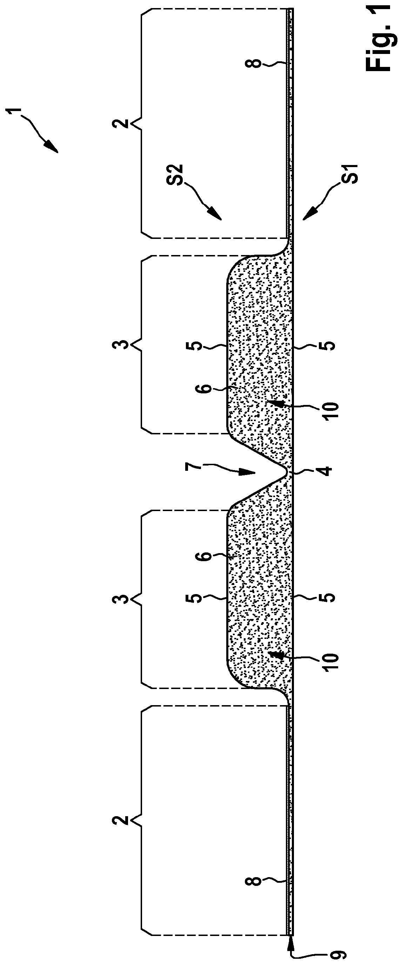

In Figur 1 ist ein Querschnittsprofil eines länglichen Dichtungsstreifens 1 dargestellt. Das Querschnittsprofil weist zwei flache äußere Befestigungsabschnitte 2 auf, zwischen denen zwei dickere Dichtabschnitte 3 angeordnet sind. Die Dichtabschnitte 3 sind durch eine Sollbiegestelle 4 mit geringer Dicke voneinander getrennt.

Die Befestigungsabschnitte 2 sind im Wesentlichen aus einem dünnen flexiblen Material oder Materialverbund ausgebildet. So können die Befestigungsabschnitte 2 sowohl in Längsrichtung als auch in Querrichtung des Dichtungsstreifens 1 an verschiedenen Konturen von Bauelementen, wie beispielsweise Gebäudebauteile, insbesondere Wände, Decken und dergleichen, angepasst werden. Insgesamt ist der Dichtungsstreifen 1 aus einem Folienmaterial 9 ausgebildet, das zur strukturellen Verstärkung mit einem Gitter oder Gewebe oder einer sonstigen Verstärkungsstruktur versehen bzw. armiert sein kann.

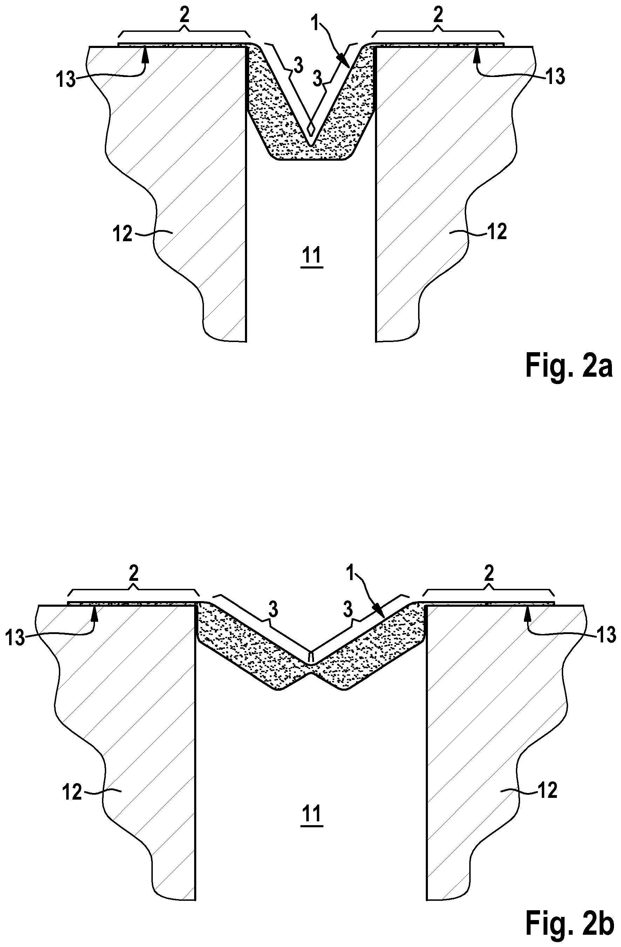

Figuren 2a und 2b zeigen jeweils eine Fuge 11 zwischen zwei Bauelementen 12, in der der Dichtungsstreifen 1 angebracht ist. Wie in den Figuren 2a und 2b gezeigt, wird der Dichtungsstreifen 1 so in bzw. über einer Fuge 11 angebracht, dass die Aufnahme von Relativbewegungen zwischen den zwei voneinander beabstandeten Bauelementen 12 nicht behindert wird. Dabei werden die Befestigungsabschnitte 2 an Randbereichen 13 der Bauelemente 12, die an die Fuge 11 angrenzen, befestigt.

Die Dichtabschnitte 3 sind jeweils als zwischen zwei Folienabschnitten 5 ausgebildete Kammern 6 ausgebildet (Fig.1), wobei die Kammern 6 mit einem Schaum 10 gefüllt sind. Der Schaum 10 ist flexibel, elastisch und leicht komprimierbar und vorzugsweise mit einem feuerbeständigen und/oder intumeszierenden Material versehen oder aus diesem gebildet. Der Schaum 10 kann einen Polyurethan-Schaum aufweisen und insbesondere eine Dichte zwischen 40 - 400 kg/m³ haben.

Zur Soll-Biegestelle 4 hin können die Querschnitte der Kammern 6 eine sich verjüngende Breite aufweisen, so dass die Soll-Biegestelle 4 durch eine zwischen den Dichtabschnitten 3 ausgebildete Ausnehmung 7 mit etwa keilförmigem Querschnitt ausgebildet ist. Das Querschnittprofil des Dichtungsstreifens 1 ist im Wesentlichen an einer ersten Hauptseite S1 eben ausgebildet, so dass die Kammern 6 der Dichtungsabschnitte 3 auf einer gegenüberliegenden zweiten Hauptseite S2 über die Fläche der Befestigungsabschnitte 2 auf der zweiten Hauptseite S2 hervorstehen.

Die Befestigungsabschnitte 2 können auf der zweiten Hauptseite S2 mit Klebeflächen 8 versehen sein, mit der der Dichtungsstreifen 1 auf die entsprechenden Randbereiche 13 der Bauelemente 12 aufgeklebt werden kann, so dass die Dichtungsabschnitte 3, wie in den Figuren 2a und 2b gezeigt, in eine dazwischenliegende Fuge 11 hineinragen. Man erkennt, dass die Randbereiche 2 des Dichtungsstreifens 1 so an die Randbereiche 13 der Bauelemente 12 aufgeklebt werden, dass die Übergänge zwischen den Befestigungsabschnitten 2 und dem zugeordneten Dichtabschnitt 3 an den die Fuge 11 begrenzenden Rändern der Bauelemente 12 angeordnet sind. Auf diese Weise sind die Klebeflächen 8 vollständig auf den Randbereichen 13 der Bauelemente 12 aufgeklebt, und die Dichtabschnitte 3 ragen vollständig in die Fuge 11 zwischen den Bauelementen 12 hinein. Bei einem sich vergrößernden Abstand zwischen den Bauelementen 12 bzw. einer sich vergrößernden Breite der Fuge 11, wie in Figur 2b dargestellt, können sich die Dichtungsabschnitte 3 aufspreizen, ohne dass die Fuge 11 dadurch undicht wird.

Das Folienmaterial 9 des Dichtungsstreifens 1 ist vorzugsweise so gewählt, dass es eine gute Haftung mit dem Schaum 10 aufweist. Zumindest die Oberfläche der ersten Hauptseite S1 sollte so beschaffen sein, dass sie mit herkömmlicher Wandfarbe überstrichen werden kann.

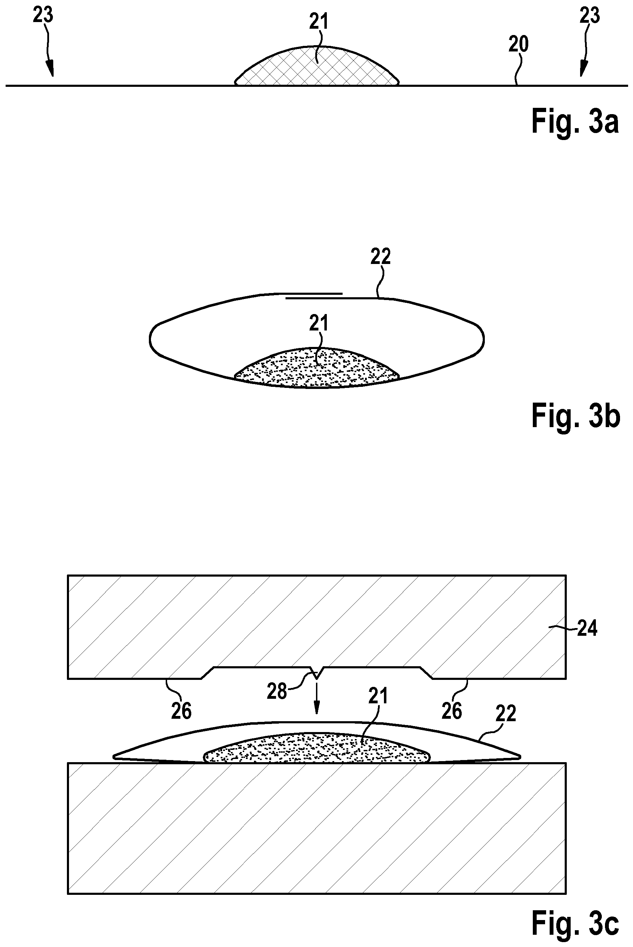

In den Figuren 3a bis 3c sind Verfahrenszustände zur Herstellung eines Dichtungsstreifens 1 entsprechend der Ausführungsform der Figur 1 dargestellt. Das Verfahren geht aus von einem z.B. durch Einwirkung von Wärme verschweißbaren Folienband 20, das mit sich selbst verschweißbar ist. Das Folienband 20 kann aus folgenden Folienmaterialien ausgebildet sein: Polyethylen, Polypropylen, Polyvinylchlorid, Polystyrol, Polyester, Polyamid, Polycarbonat, Verbundmaterialien, oder ähnlichen Kunststoffmaterialien. Denkbar ist auch, dass das Folienband mit einer Gitter- oder Gewebestruktur versehen ist, wie einer Struktur aus Glas, Faser, Textil oder ähnlichem.

Wie in der Querschnittsdarstellung der Figur 3a gezeigt, wird etwa auf einen Mittenbereich des Folienbands 20, der sich entlang der Längsrichtung des Folienbands 20 erstreckt, ein flüssiges Schaummaterial 21 aufgebracht, das zunächst noch nicht aufgeschäumt und verfestigt ist. Vor dem Aufschäumen und Verfestigen des Schaummaterials 21 werden die Bereiche des Folienbands 20 zu beiden Seiten des aufgebrachten Schaummaterials 21 beidseitig über das flüssige Schaummaterial 21 umgebogen bzw. umgeklappt. Dabei überlappen sich die Seitenränder 23 des Folienbandes 20, so dass ein sich in Längsrichtung L erstreckender Folienschlauch 22 mit einem darin eingebrachten Streifen aus flüssigem Schaummaterial 21 ausgebildet wird. Dies ist in der Querschnittsdarstellung der Figur 3b gezeigt.

In einer alternativen Ausführungsform wird das flüssige Schaummaterial 21 auf einen Bereich der Folienbandes 20 aufgebracht, der eine sich in Längsrichtung erstreckende Linie mit einem Abstand von etwa einem Viertel seiner Breite von einem Seitenrand 23 umfasst. Der verbleibende größere Abschnitt des Folienbands 20 seitlich des flüssigen Schaummaterials 21 wird vor dem Aufschäumen und Verfestigen einseitig über das flüssige Schaummaterial 21 umgebogen bzw. umgeklappt, so dass die Seitenränder 23 etwa übereinander zu liegen kommen. Dadurch kann ebenfalls ein sich in Längsrichtung erstreckender Folienschlauch 22 mit einem darin eingebrachten Streifen aus flüssigem Schaummaterial 21 ausgebildet werden.

Nach dem Umklappen zum Ausbilden des Folienschlauches 22 wird dieser einem Formstempel 24 zugeführt, der den Folienschlauch 22 abschnittsweise zusammendrückt und z.B. durch Hitzeeinwirkung dort miteinander verschweißt, wo gegenüberliegende Folienbereiche aneinander anliegen. Der Formstempel 24 ist in Figur 3c dargestellt und weist beispielsweise drei Pressbereiche auf, die die beiden Befestigungsabschnitte 2 des Dichtungsstreifens 1 und die Soll-Biegestelle 4 des Dichtungsstreifens 1 ausbilden bzw. definieren.

Der Folienschlauch 22 wird für diesen Arbeitsschritt so zu dem Formstempel 24 angeordnet, dass der Streifen des Schaummaterials 21 etwa mittig zu dem stegförmigen Pressbereich 28 angeordnet ist, der zur Ausbildung der Soll-Biegestelle 4 dient. Dadurch drückt der im wesentlichen stegförmige Pressbereich 28 für die Soll-Biegestelle 4 etwa in die Mitte des länglichen Folienschlauchs 22, um so das noch flüssige Schaummaterial 21 etwa hälftig aufzuteilen. Durch das Zusammenpressen verbreitert sich der Folienschlauch 22, so die seitlichen Pressbereiche 26 des Formstempels 24, die die Randbereiche ausbilden, einen oberen und unteren Abschnitt des Folienschlauches 22 aufeinanderpressen, miteinander verbinden und dadurch die Befestigungsabschnitte 2 des Dichtungsstreifens 1 ausbilden. Zwischen den Pressbereichen 26 für die Befestigungsabschnitte 2 weist der Formstempel 24 zwei, beidseitig des Pressbereichs für die Soll-Biegestelle 4 angeordnete Vertiefungen auf, so dass beim Pressvorgang sich im Bereich der Vertiefungen das Schaummaterial sammelt und die Dichtabschnitte 3 ausbildet.

An den Dichtabschnitten 3 liegen die Folienabschnitte nicht aneinander, sondern bilden jeweils die Kammer 6 aus, in der jeweils etwa eine Hälfte des Schaummaterials 21 aufgenommen wird.

Beim Pressen werden an den Pressbereichen 26 obere und untere Folienabschnitte aufeinandergedrückt und z.B. durch die Hitzeeinwirkung miteinander verschweißt. Auf diese Weise werden die Kammern 6 voneinander getrennt und die dazwischenliegende Soll-Biegestelle 4 ausgebildet.

Alternativ kann zwischen den Randbereichen beim Zusammenpressen eine dünne Schicht des Schaummaterials verbleiben, um dadurch die Stabilität der Befestigungsabschnitte 2 zu verbessern. Dies kann erreicht werden, indem die Menge des eingebrachten Schaummaterials 21 erhöht wird, so dass beim Verpressen ein Teil des flüssigen Schaummaterials 21 unter die Pressbereiche 26 gedrückt wird.

Die Befestigungsabschnitte 2 können nach dem Verpressen mit einer Klebeschicht bzw. mit einer Klebefläche 8, insbesondere einem Klebeband, auf der Seite, auf der die Kammern 6 mit dem Schaummaterial 21 hervorstehen, versehen werden, so dass bei der Montage des Dichtungsstreifens 1 die Befestigungsabschnitte 2 an die Randbereiche 13 der Bauelemente 12 geklebt werden können.

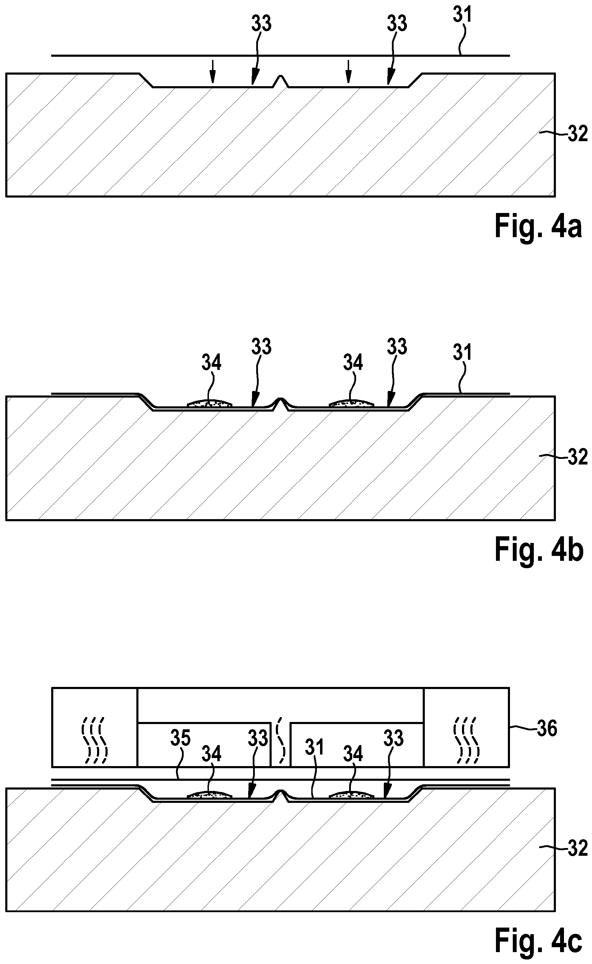

Die Figuren 4a bis 4c zeigen Verfahrenszustände eines weiteren möglichen Herstellungsverfahrens in Querschnittsdarstellungen. Dazu wird, wie in Figur 4a gezeigt, ein erstes Folienband 31 auf einen Formstempel 32 aufgelegt, der im Bereich der auszubildenden Dichtabschnitte 3 zwei Vertiefungen 33 aufweist. Um das erste Folienband 31 in die Vertiefungen 33 einzubringen, kann dieses z.B. mit Hilfe eines Unterdrucks in diese eingesaugt werden.

Nun werden, wie in Figur 4b gezeigt, die beiden Vertiefungen 33 jeweils mit einem in Längsrichtung verlaufenden Streifen eines flüssigen Schaummaterials 34 versehen und anschließend ein zweites Folienband (nicht gezeigt in Fig. 4b) ebenfalls in Längsrichtung auf das erste Folienband 31 angebracht, so dass im Bereich der Vertiefungen 33 abgeschlossene Kammern 6 ausgebildet werden, in denen das flüssige Schaummaterial 34 aufschäumt und verfestigt.

Wie in Figur 4c gezeigt, wird durch Hitzeeinwirkung, z.B. mithilfe einer beheizten Pressstempels 36, das erste Folienband 31 mit dem zweiten Folienband 35 im Bereich der auszubildenden Befestigungsabschnitte 2 und im Bereich der auszubildenden Soll-Biegestelle 4 miteinander verschweißt, um den Dichtungsstreifen 1 auszubilden, wie er als Beispiel in Figur 1 dargestellt ist.

## Patentansprüche

1. Dichtungsstreifen (1) zum Abdichten einer Fuge (11) zwischen zwei Bauelementen (12), insbesondere zwischen Gebäudebauteilen, wobei sich der Dichtungsstreifen (1) in einer Längsrichtung (L) erstreckt und im Querschnittsprofil zwei Befestigungsabschnitte (2) aufweist, zwischen denen zwei separate benachbarte Dichtabschnitte (3) vorgesehen sind, wobei der Dichtungsstreifen (1) aus einem Folienmaterial (9) und einem komprimierbaren Schaum ausgebildet ist, wobei die Dichtabschnitte (3) jeweils eine, zwischen zwei Folienabschnitten (5) des Folienmaterials (9) ausgebildete, Kammer (6) aufweisen, wobei die Dichtabschnitte (3) unmittelbar aneinander angrenzend ausgebildet sind, wobei die Dichtabschnitte (3) durch eine in Längsrichtung (L) verlaufende Soll-Biegestelle (4) voneinander getrennt sind, wobei die Dichtabschnitte (3) hin zu der Soll-Biegestelle (4) sich verjüngend ausgebildet sind, um eine Ausnehmung (7) zwischen den Dichtabschnitten (3) auszubilden, und wobei die Kammer (6) mit dem komprimierbaren Schaum gefüllt ist, **dadurch gekennzeichnet, dass** die Folienabschnitte (5) der Dichtabschnitte (3) an den Befestigungsabschnitten (2) und an der Soll-Biegestelle (4) miteinander verschweißt sind.

2. Dichtungsstreifen (1) nach Anspruch 1, wobei der Schaum einen elastischen Polyurethan Schaum aufweist und insbesondere eine Dichte von 40 - 400kg/m³ aufweist.

3. Dichtungsstreifen (1) nach einem der Ansprüche 1 oder 2, wobei die Ausnehmung (7) keilförmig ausgebildet ist.

4. Dichtungsstreifen (1) nach einem der Ansprüche 1 bis 3, wobei die Dichtabschnitte (3) nur an einer Hauptfläche (S1, S2) des Dichtungsstreifens (1) hervorstehen.

5. Dichtungsstreifen (1) nach Anspruch 4, wobei die Befestigungsabschnitte (2) auf derjenigen Seite des Dichtungsstreifens (1), auf der auch die Dichtabschnitte (3) hervorstehen, mit Klebeflächen (8), insbesondere mit Hotmelt- oder Acrylatklebstoff, versehen sind.

6. Dichtungsstreifen (1) nach einem der Ansprüche 1 bis 5, wobei das Folienmaterial (9) mit einer strukturellen Verstärkung versehen ist, die insbesondere als aufgebrachte oder eingebettete Gitter- oder Gewebestruktur ausgebildet ist.

7. Dichtungsstreifen (1) nach einem der Ansprüche 1 bis 6, wobei das Folienmaterial (9) den Dichtungsstreifen vollumfänglich umhüllt.

8. Anordnung umfassend:
- einen Dichtungsstreifen (1) nach einem der Ansprüche 1 bis 7, und
- eine Fuge (11) zwischen zwei Bauelementen (12),
wobei die Befestigungsabschnitte (2) des Dichtungsstreifens (1) auf sich an die Fuge (11) anschließende Randbereiche der Bauelemente (12) aufgeklebt sind, so dass die Dichtabschnitte (3) in einem zumindest teilweise um die Soll-Biegestelle (7) zusammengeklappten Zustand in die Fuge (11) hineinragen.

9. Verfahren zur Herstellung eines Dichtungsstreifens (1) nach einem der Ansprüche 1 bis 6, mit folgenden Schritten:
- Bereitstellen eines länglichen Folienbands (20);
- Einbringen von flüssigem, nicht ausgehärteten Schaummaterial (21) auf das Folienband (20);
- Umbiegen des Folienbands (20) quer zur Längsrichtung des Folienbands (20), um einen Folienschlauch auszubilden;
- Pressen des Folienschlauchs mit einem Pressstempel (24), so dass an den Befestigungsabschnitten (2) und an der Soll-Biegestelle (4) übereinanderliegende Folienabschnitte miteinander verschweißt werden und sich das Schaummaterial (21) vor dem Aushärten in benachbarten Kammern (6) sammelt, um die Dichtabschnitte (3) auszubilden.

10. Verfahren nach Anspruch 9, wobei das Pressen des Folienschlauchs so ausgeführt wird, dass an den Befestigungsabschnitten (2) zwischen den Folienabschnitten eine Schicht des Schaummaterials verbleibt, um die Befestigungsabschnitte (2) zu verstärken und/oder zu verkleben.

11. Verfahren zur Herstellung eines Dichtungsstreifens (1) nach einem der Ansprüche 1 bis 7, mit folgenden Schritten:
- Bereitstellen eines länglichen ersten Folienbands (31) in einem Formstempel (32) mit zueinander benachbarten Vertiefungen (33);
- Aufbringen von flüssigem, nicht ausgehärteten Schaummaterial (34) in die Vertiefungen (33) des ersten Folienbandes (31);
- Anbringen eines zweiten Folienbands (35) auf das erste Folienband (31), so dass die Folienbänder (31, 35) an den Befestigungsabschnitten (2) und an der Soll-Biegestelle (4) miteinander verschweißt werden und das Schaummaterial (34) in durch die Vertiefungen (33) gebildeten Kammern (6) eingeschlossen wird.

## Claims

1. Sealing strip (1) for sealing a joint (11) between two components (12), in particular between building components, the sealing strip (1) extending in a longitudinal direction (L) and having, in the cross-sectional profile, two fastening portions (2) between which two separate adjacent sealing portions (3) are provided, the sealing strip (1) being formed from a film material (9) and a compressible foam, the sealing portions (3) each having a chamber (6) formed between two film portions (5) of the film material (9), the sealing portions (3) being formed so as to be directly adjacent to one another, the sealing portions (3) being separated from one another by an intended bending point (4) extending in the longitudinal direction (L), the sealing portions (3) being designed to taper toward the intended bending point (4) in order to form a recess (7) between the sealing portions (3), and the chamber (6) being filled with the compressible foam, **characterized in that** the film portions (5) of the sealing portions (3) are welded together at the fastening portions (2) and at the intended bending point (4).

2. Sealing strip (1) according to claim 1, wherein the foam has an elastic polyurethane foam and in particular has a density of from 40-400 kg/m³.

3. Sealing strip (1) according to either claim 1 or claim 2, wherein the recess (7) is wedge-shaped.

4. Sealing strip (1) according to any of claims 1 to 3, wherein the sealing portions (3) protrude only on a main surface (S1, S2) of the sealing strip (1).

5. Sealing strip (1) according to claim 4, wherein the fastening portions (2) are provided with adhesive surfaces (8), in particular with hot-melt or acrylate adhesive, on the side of the sealing strip (1) on which the sealing portions (3) also protrude.

6. Sealing strip (1) according to any of claims 1 to 5, wherein the film material (9) is provided with a structural reinforcement which is designed in particular as an applied or embedded grid or fabric structure.

7. Sealing strip (1) according to any of claims 1 to 6, wherein the film material (9) completely envelops the sealing strip.

8. Assembly comprising:
- a sealing strip (1) according to any of claims 1 to 7, and
- a joint (11) between two components (12),
wherein the fastening portions (2) of the sealing strip (1) are glued onto edge regions of the components (12) adjoining the joint (11), so that the sealing portions (3) project into the joint (11) in a state in which they are at least partially folded together about the intended bending point (7).

9. Method for producing a sealing strip (1) according to any of claims 1 to 6, comprising the following steps:
- providing an elongate film strip (20);
- introducing liquid, uncured foam material (21) onto the film strip (20);
- bending the film strip (20) transversely to the longitudinal direction of the film strip (20) to form a film tube;
- pressing the film tube using a pressing ram (24) so that film portions lying on top of one other are welded together at the fastening portions (2) and at the intended bending point (4) and, before curing, the foam material (21) collects in adjacent chambers (6) to form the sealing portions (3).

10. Method according to claim 9, wherein the pressing of the film tube is carried out in such a way that a layer of the foam material remains on the fastening portions (2) between the film portions in order to reinforce and/or glue the fastening portions (2).

11. Method for producing a sealing strip (1) according to any of claims 1 to 7, comprising the following steps:
- providing an elongate first film strip (31) in a forming die (32) with mutually adjacent recesses (33);
- applying liquid, uncured foam material (34) into the recesses (33) in the first film strip (31);
- attaching a second film strip (35) to the first film strip (31) so that the film strips (31, 35) are welded together at the fastening portions (2) and at the intended bending point (4) and the foam material (34) is enclosed in chambers (6) formed by the recesses (33).

## Revendications

1. Bande d'étanchéité (1) destinée à assurer l'étanchéité d'un joint (11) entre deux éléments structurels (12), en particulier entre des composants structurels de bâtiment, la bande d'étanchéité (1) s'étendant dans une direction longitudinale (L) et présentant deux parties de fixation (2) dans le profilé de section transversale, entre lesquelles sont prévues deux parties d'étanchéité (3) adjacentes séparées, la bande d'étanchéité (1) étant formée d'un matériau en film (9) et d'une mousse compressible, les parties d'étanchéité (3) présentant respectivement une chambre (6) formée entre deux parties en film (5) du matériau en film (9), les parties d'étanchéité (3) étant formées de façon à être juxtaposées directement l'une à l'autre, les parties d'étanchéité (3) étant séparées l'une de l'autre par un point de pliage de consigne (4) s'étendant dans la direction longitudinale (L), les parties d'étanchéité (3) étant effilées vers le point de pliage de consigne (4) afin de former un évidement (7) entre les parties d'étanchéité (3), et la chambre (6) étant remplie de mousse compressible,
**caractérisée en ce que** les parties en film (5) des parties d'étanchéité (3) sont soudées ensemble au niveau des parties de fixation (2) et au niveau du point de pliage de consigne (4).

2. Bande d'étanchéité (1) selon la revendication 1, dans laquelle la mousse présente une mousse de polyuréthane élastique et présente en particulier une densité de 40 à 400 kg/m³.

3. Bande d'étanchéité (1) selon l'une des revendications 1 ou 2, dans laquelle l'évidement (7) est en forme de coin.

4. Bande d'étanchéité (1) selon l'une des revendications 1 à 3, dans laquelle les parties d'étanchéité (3) ne dépassent que sur une surface principale (S1, S2) de la bande d'étanchéité (1).

5. Bande d'étanchéité (1) selon la revendication 4, dans laquelle les parties de fixation (2) sont pourvues de surfaces adhésives (8), en particulier d'adhésif thermofusible ou acrylique, sur ledit côté de la bande d'étanchéité (1) sur lequel dépassent également les parties d'étanchéité (3).

6. Bande d'étanchéité (1) selon l'une des revendications 1 à 5, dans laquelle le matériau en film (9) est pourvu d'un renfort structurel, lequel est conçu en particulier comme une structure en treillis ou en tissu appliquée ou incorporée.

7. Bande d'étanchéité (1) selon l'une des revendications 1 à 6, dans laquelle le matériau en film (9) enveloppe complètement la bande d'étanchéité.

8. Agencement comprenant :
- une bande d'étanchéité (1) selon l'une des revendications 1 à 7, et
- un joint (11) entre deux éléments structurels (12),
dans lequel les parties de fixation (2) de la bande d'étanchéité (1) sont collées sur les zones de bord des éléments structurels (12) adjacentes au joint (11) de telle sorte que les parties d'étanchéité (3) font saillie dans le joint (11) dans un état au moins partiellement plié autour du point de pliage de consigne (7).

9. Procédé destiné à la fabrication d'une bande d'étanchéité (1) selon l'une des revendications 1 à 6, comportant les étapes suivantes :
- fourniture d'un ruban en film (20) allongé ;
- introduction d'un matériau en mousse (21) liquide non durci sur le ruban en film (20) ;
- pliage du ruban en film (20) transversalement à la direction longitudinale du ruban en film (20) afin de former un tube en film ;
- pressage du tube en film au moyen d'une matrice de presse (24) de sorte que les parties en film superposées sont soudées ensemble au niveau des parties de fixation (2) et au niveau du point de pliage de consigne (4) et que le matériau en mousse (21) s'accumule dans des chambres (6) adjacentes avant de durcir, afin de former les parties d'étanchéité (3).

10. Procédé selon la revendication 9, dans lequel le pressage du tube en film est effectué de telle sorte qu'une couche du matériau en mousse reste sur les parties de fixation (2) entre les parties en film afin de renforcer et/ou de coller les parties de fixation (2).

11. Procédé destiné à la fabrication d'une bande d'étanchéité (1) selon l'une des revendications 1 à 7, comportant les étapes suivantes :
- fourniture d'un premier ruban en film (31) allongé dans une matrice de formage (32) avec des cavités (33) adjacentes les unes aux autres ;
- application d'un matériau en mousse (34) liquide non durci dans les cavités (33) du premier ruban en film (31) ;
- montage d'un second ruban en film (35) au premier ruban en film (31) de sorte que les rubans en film (31, 35) sont soudés ensemble au niveau des parties de fixation (2) et au niveau du point de pliage de consigne (4) et que le matériau en mousse (34) est renfermé dans les chambres (6) formées par les cavités (33).
